# EUROPEAN PATENT APPLICATION

(11) **EP 4 541 697 A1**
(43) Date of publication of application: **23.04.2025**
(21) Application number: 23822924.9
(22) Date of filing: 30.05.2023
(51) Int. Cl.: B62D 25/20, B62D 21/11, B62D 21/09

(54) **REAR VEHICLE FLOOR, AND VEHICLE**

(30) Priority: 16.06.2022 CN 202210695607
(71) Applicant: Zhejiang Geely Holding Group Co., Ltd., Hangzhou, Zhejiang 310051 (CN); Zhejiang Liankong Technologies Co., Ltd, Ningbo, Zhejiang 315336 (CN)
(72) Inventor: OU, Tianqiao, Hangzhou Bay New District Ningbo, Zhejiang 315336 (CN); LI, Tianqi, Hangzhou Bay New District Ningbo, Zhejiang 315336 (CN); LU, Chuanfei, Hangzhou Bay New District Ningbo, Zhejiang 315336 (CN); CHEN, Jinlong, Hangzhou Bay New District Ningbo, Zhejiang 315336 (CN); LI, Qibin, Hangzhou Bay New District Ningbo, Zhejiang 315336 (CN); ZHANG, Xueqiu, Hangzhou Bay New District Ningbo, Zhejiang 315336 (CN); SONG, Yadong, Hangzhou Bay New District Ningbo, Zhejiang 315336 (CN)
(74) Representative: Zaboliene, Reda
(86) International application number: PCT/CN2023/097278
(87) International publication number: WO 2023/241354

(57) **Abstract**

A rear vehicle floor, and a vehicle. The rear vehicle floor comprises a rear floor body (1) and a C-ring cross beam (2) arranged on the rear floor body; and the rear floor body and the C-ring cross beam are of an integral structure. According to the rear vehicle floor, the rear floor body and the C-ring cross beam are provided as an integral structure, such that integration and the property of lightweight of a vehicle body can be achieved, and the rigidity and NVH performance of the entire vehicle can be improved.

## Description

This document claims priority of Chinese patent application No. 202210695607.0, filed on 16 June 2022, and entitled "A rear vehicle floor and a vehicle". The entire disclosure of the above-identified application is incorporated herein by reference.

### TECHNICAL FIELD

The present document relates to automotive technologies, in particular to a rear vehicle floor and a vehicle having the same.

### DESCRIPTION OF RELATED ART

With the rapid development and progress of new technologies in the automotive industry, people's requirements for vehicles are increasingly increased, not only high performance and safety for vehicle are required, but also the design and use of modularization, high integration and lightweight are also increasingly sought after and recognized by OEMs.

### TECHNICAL ISSUES

Among them, the C-ring structure of the vehicle body is an important closed loop of a cage-type body structure, and the C-ring structure has a greater impact on the performance of the whole vehicle, such as NVH, torsional stiffness, strength and durability. The traditional C-ring structure of the steel body is composed of multiple sheet metal parts welded together, which not only requires a large amount of tooling equipment such as molds, fixtures and inspection tools to be invested, but also brings the complexity of the C-ring structure welded together by multiple sheet metal parts which is not conducive to the high degree of integration and lightweight of the vehicle body.

### TECHNICAL SOLUTION

The present document provides a rear vehicle floor and a vehicle having the same, wherein the rear floor body and a C-ring crossbeam are integrated into a one-piece structure, which can achieve a high degree of integration and lightweight of the vehicle body, and can improve the stiffness and NVH performance of the whole vehicle.

In one aspect, the present document provides a rear vehicle floor, which includes a rear floor body, and further includes a C-ring crossbeam provided on the rear floor body;
The rear floor body and the C-ring crossbeam are integrated into a one-piece structure.

Preferably, the rear vehicle floor further includes a damper mounting portion provided on the rear floor body;
The damper mounting portion and the rear floor body are integrated into a one-piece structure.

Preferably, the damper mounting portion includes a first damper mounting portion and a second damper mounting portion, the first damper mounting portion and the second damper mounting portion are fixedly connected to a vehicle damper mounting portion; the first damper mounting portion and the second damper mounting portion are respectively provided on both sides, or provided on the same side of the C-ring crossbeam in a width direction.

Preferably, the damper mounting portion includes a first damper locating hole and a second damper locating hole, the first damper locating hole and the second damper locating hole are clearance fitted with the vehicle damper locating portion;
The first damper locating hole and the second damper locating hole are respectively provided on both sides or provided on the same side of the C-ring crossbeam in the width direction.

Preferably, the C-ring crossbeam projects from the rear floor body, and the C-ring crossbeam includes an inverted U-shaped structure.

Preferably, the C-ring crossbeam is provided with a first crossbeam mounting portion, the first crossbeam mounting portion is fixedly connected to a vehicle seat mounting portion.

Preferably, the C-ring crossbeam is provided with a second crossbeam mounting portion, the second crossbeam mounting portion is fixedly connected to a vehicle trim mounting portion.

Preferably, the rear vehicle floor further includes a wheel cover provided on the rear floor body, the wheel cover and the rear floor body are integrated into a one-piece structure.

Preferably, the dynamic stiffness of the damper mounting portion along a length direction of the vehicle body is greater than KN/mm, and the dynamic stiffness of the damper mounting portion along a width direction of the vehicle body is greater than KN/mm.

Preferably, the first damper mounting portion includes a first mounting through-hole and the second damper mounting portion includes a second mounting through-hole.

Preferably, a reinforcing structure is provided on a side of the first damper mounting portion and the second damper mounting portion away from a vehicle vibration damper 7.

On the other hand, the present document provides a vehicle including a rear vehicle floor as described in any one of the foregoing.

### BENEFICIAL EFFECT

The present document provides a rear vehicle floor and a vehicle with the following beneficial effects:
The rear floor body and the C-ring crossbeam provided in the one-piece structure of the present document can achieve a high degree of integration and lightweight of the vehicle body, and can improve the stiffness and NVH performance of the whole vehicle.

### BRIEF DESCRIPTION OF THE DRAWINGS

In order to more clearly illustrate the technical solutions in the embodiments of the present document, the accompanying drawings to be used in the description of the embodiments will be briefly introduced below, and it is obvious that the accompanying drawings in the following description are only some of the embodiments of the present document, and for the person of ordinary skill in the art, other accompanying drawings can be obtained based on these drawings without creative work.
FIG. 1 is a schematic structural diagram of a C-ring structure and a damper mounting assembly of a prior art;
FIG. 2 is a schematic structural diagram of a prior art in which the damper mounting assembly is screwed to a vehicle vibration damper;
FIG. 3 is a schematic diagram of a partial structure of a rear vehicle floor according to an embodiment of the present document;
FIG. 4 is a schematic structural diagram of a rear vehicle floor according to an embodiment of the present document;
FIG. 5 is a schematic diagram of an overall structure of a rear vehicle floor according to an embodiment of the present document;
FIG. 6 is a schematic diagram of an assembly structure of a rear vehicle floor and a vehicle vibration damper according to an embodiment of the present document;
FIG. 7 shows a comparison curve diagram of a dynamic stiffness of the damper mounting portion according to an embodiment of the present document and a dynamic stiffness of the damper mounting assembly in the prior art.

The following is a supplementary description of the accompanying drawings:
1 - rear floor body; 2 - C-ring crossbeam; 21 - first crossbeam mounting portion; 22 - second crossbeam mounting portion; 3 - damper mounting portion; 31 - first damper mounting portion; 32 - second damper mounting portion; 33 - first damper locating hole; 34 - second damper locating hole; 4 - wheel cover; 5 - C-ring structure; 6 - damper mounting assembly; 7 - vehicle vibration damper.

### DETAILED DESCRIPTION OF THE EMBODIMENTS

In order to enable those in the art to better understand the embodiments of the present document, the technical solutions in the embodiments of the present document will be clearly and completely described below in conjunction with the accompanying drawings in the embodiments of the present document. Obviously, the described embodiments are only parts of the embodiments of the present document, but not all of the embodiments. Based on the embodiments in the present document, all other embodiments obtained by a person of ordinary skill in the art without creative work will fall within the protection scope of the present document.

The term 'an embodiment' or 'embodiments' herein refers to specific features, structures or characteristics that may be included in at least one implementation of the present document. In the description of the present document, it is to be understood that the terms 'up', 'down', 'top', 'bottom', etc. are indicative of orientations or positional relationships based on those shown in the accompanying drawings, and are only to facilitate and simplify the description of the present document, and are not indicative of, or suggestive of, the device or element referred to are required to have a particular orientation, to be constructed and operated in a particular orientation, and therefore are not to be construed as limitations of the present document. Furthermore, the terms 'first' and 'second' are used only for descriptive purposes, and are not to be construed as indicating or implying relative importance or implicitly specifying the number of the indicated technical features. Thus, a feature defined with the terms 'first' and 'second' may expressly or implicitly include one or more such features. Furthermore, the terms 'first', 'second', etc. are used to distinguish similar objects and are not used to describe a particular order or sequence. It should be understood that the data so used may be interchanged, where appropriate, so that the embodiments of the present document described herein can be implemented in an order other than those illustrated or described herein.

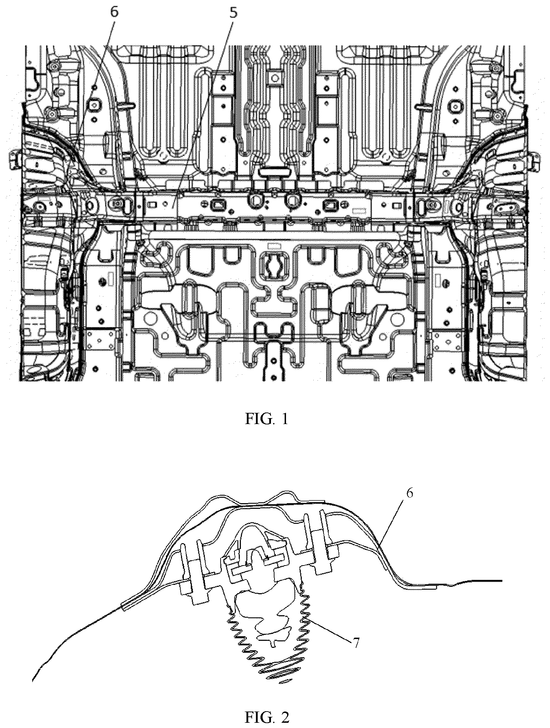

In order to facilitate the illustration of the advantages of the rear vehicle floor in the embodiments of the present document, at the beginning of the detailed description of the technical solutions of the embodiments of the present document, an overview of the relevant elements of the prior art is first provided:
Please refer to FIGS. 1 and 2, FIG. 1 is a schematic structural diagram of a C-ring structure and a damper mounting assembly of the prior art, and FIG. 2 is a schematic structural diagram of a prior art in which the damper mounting assembly is screwed to a vehicle vibration damper 7. The C-ring structure 5 and the damper mounting assembly 6 in FIG. 1 are respectively welded to a rear vehicle floor, wherein the C-ring structure 5 is composed of a plurality of sheet metal parts welded together, so that not only a large amount of tooling equipment such as molds, fixtures and inspection tools need to be invested, but also the structure is complicated, which is not conducive to a high degree of integration and lightweight of the vehicle body.

In addition, please refer to FIG. 2, in the prior art, for the parts connected by welding joints, the force transfer between the parts mainly rely on the welding joints. A diameter of the welding core of the welding joint is small, while the force is large, the position of the welding joints are prone to fatigue damage, so that the force transfer efficiency is low, and is not conducive to improving the torsional stiffness of the entire vehicle, and is not conducive to prolonging the service life of the entire vehicle.

In view of the deficiencies of the prior art, the rear vehicle floor of the present document is provided with a structure integrated by a rear floor body, a C-ring crossbeam and a damper mounting portion, which can achieve a high degree of integration and lightweight of the vehicle body, and can improve the stiffness and NVH performance of the entire vehicle.

The technical solutions in the embodiments of the present document are described below in conjunction with the accompanying drawings.

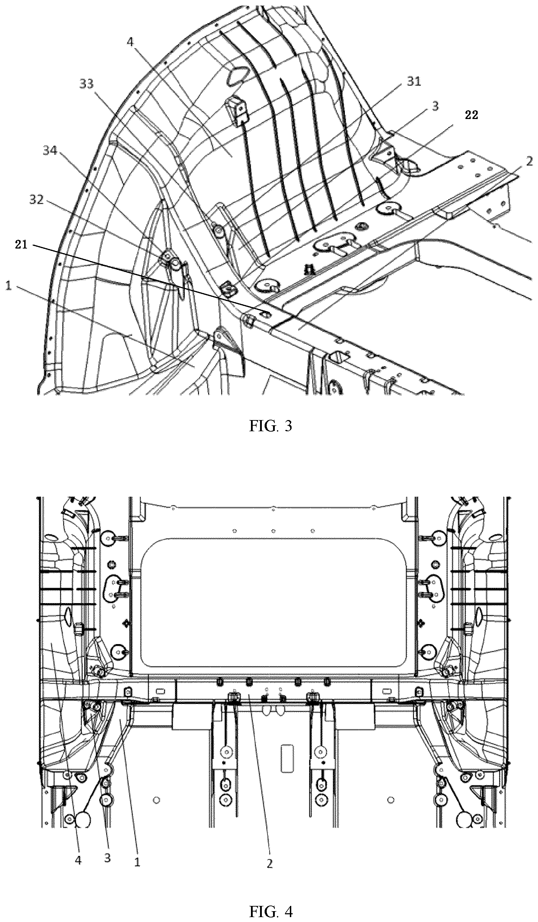

Referring to FIGS. 3, 4, and 5, in the embodiment of the present document, the rear vehicle floor includes a rear floor body 1, and further includes a C-ring crossbeam 2 disposed on the rear floor body 1; the rear floor body 1 and the C-ring crossbeam 2 are integrated into a one-piece structure.

In the embodiment of the present document, the rear floor body 1 and the C-ring crossbeam 2 are integrally cast. Specifically, the rear vehicle floor is a one-piece cast aluminum rear floor.

In one embodiment, 17 sheet metal parts can be reduced, and the equivalent weight thereof can be reduced from 16.2 kg to 5.6 kg, with a weight reduction ratio of 65%; furthermore, the accumulation of manufacturing tolerances of parts in multiple processes can be avoided, and the positional accuracy of the mounting portions on the rear vehicle floor can be substantially improved.

The rear floor body and the C-ring crossbeam of the one-piece structure of the present document can achieve a high degree of integration and lightweight of the vehicle body, and can improve the rigidity and NVH performance of the entire vehicle.

In addition, the rear floor body and the C-ring crossbeam provided in the one-piece structure of the present document can achieve a high degree of integration of the vehicle body, for example, by integrating a crossbeam connecting plate, a damper mounting plate, a damper mounting reinforcing plate, and an inner plate of the rear wheel cover into a single body, the number of parts can be reduced, and the Y-direction width of the fixing point of the vibration damper can be reduced, and more Y-direction space is left in the vehicle, which is conducive to the maximization of the volume of the luggage compartment and the seat's better wrapping for the human body. The rear vehicle floor of the one-piece structure of the present document can improve the production and assembly efficiency of the vehicle; the rear vehicle floor of the one-piece structure does not have the problem of fatigue and durability of the welded joints of the sheet metal parts, and can improve the service life of the rear vehicle floor; the rear vehicle floor of one-piece structure replaces the welded assemblies of several sheet metal parts, and the development cycle is short, and can avoid accumulation of tolerances for the manufacture of parts of the multi-process parts. The rear vehicle floor of the one-piece structure has a high force transfer efficiency, which can improve the torsional stiffness of the entire vehicle and extend the service life of the entire vehicle.

The embodiment of the present document further includes a damper mounting portion 3 provided on the rear floor body 1; the damper mounting portion 3 and the rear floor body 1 are integrated into a one-piece structure.

Specifically, the damper mounting portion 3 and the rear floor body 1 are integrally cast, so that the excitation received by the damper mounting portion 3 can be transmitted along the C-ring crossbeam 2 and the rear floor body 1 to the entire body in all directions, and the transmission path is more numerous and the transmission efficiency is high, so as to be able to improve the static stiffness, dynamic stiffness, and NVH performance of the damper mounting portion 3.

In the embodiment of the present document, the damper mounting portion 3 includes a column-shaped first damper mounting portion 31 and a second damper mounting portion 32, and the first damper mounting portion 31 and the second damper mounting portion 32 are fixedly connected to a vehicle damper mounting portion disposed on the vehicle vibration damper 7.

In the embodiment of the present document, the damper mounting portions 3 are symmetrically disposed at two ends of the C-ring crossbeam 2 along the length direction, i.e., the damper mounting portions 3 are disposed at the front and rear ends of the C-ring crossbeam 2, and the damper mounting portions 3 are used for shock absorption of the vehicle.

In the embodiment of the present document, the vehicle damper mounting portion includes a first vehicle damper mounting portion and a second vehicle damper mounting portion disposed on the vehicle vibration damper 7, and the first vehicle damper mounting portion and the second vehicle damper mounting portion are arranged corresponding to the first damper mounting portion 31 and the second damper mounting portion 32, and in this way, a fixed connection between the damper mounting portion 3 and the vehicle vibration damper 7 is realized.

Specifically, the damper mounting portion 3 and the vehicle vibration damper 7 are screwed together.

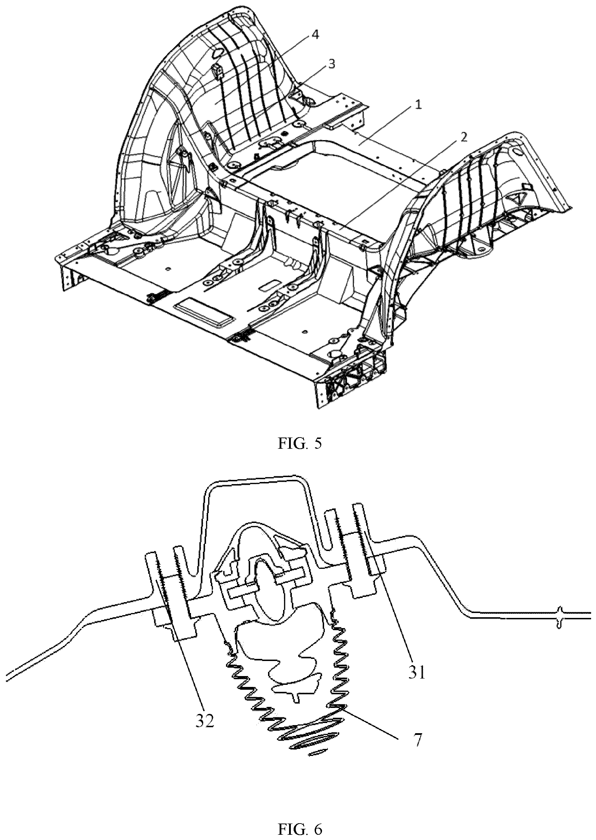

In the embodiment of the present document, please refer to FIG. 6, the first damper mounting portion 31 includes a first mounting through-hole, the second damper mounting portion 32 includes a second mounting through-hole, and the first vehicle damper mounting portion and the second vehicle damper mounting portion are arranged corresponding to the first mounting through-hole and the second mounting through-hole.

In the embodiment of the present document, the first damper mounting portion 31 and the second damper mounting portion 32 are respectively provided on both sides or provided on the same side of the C-ring crossbeam 2 in the width direction. In this way, the dynamic stiffness of the damper mounting portion 3 can be improved.

In one embodiment, the first damper mounting portion 31 and the second damper mounting portion 32 are provided on both sides of the C-ring crossbeam 2 in the width direction. In this way, the dynamic stiffness of the damper mounting portion 3 can be maximized.

In the embodiment of the present document, in the case that the first damper mounting portion 31 and the second damper mounting portion 32 are provided on both sides of the C-ring crossbeam 2 in the width direction, the dynamic stiffness of the damper mounting portion 3 in the length direction of the body is greater than or equal to 22 KN/mm, and the dynamic stiffness of the damper mounting portion 3 in the width direction of the vehicle body is greater than or equal to 28 KN/mm.

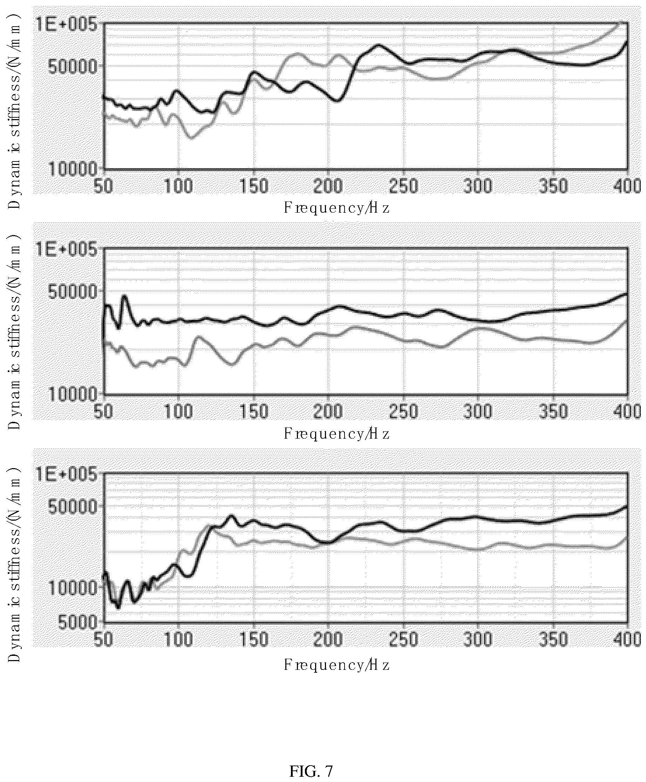

FIG. 7 shows a comparison curve diagram between the dynamic stiffness of the damper mounting portion provided by the embodiment of the present document and the dynamic stiffness of the damper mounting assembly in the prior art, and the three curve diagrams in FIG. 7 characterize, from top to bottom, the dynamic stiffness of the damper mounting portion 3 in the length direction of the vehicle body, the dynamic stiffness of the damper mounting portion 3 in the width direction of the vehicle body, and the dynamic stiffness of the damper mounting portion 3 in the height direction of the vehicle body, wherein the black curves characterize the dynamic stiffness of the damper mounting portion 3 in the embodiment of the present document that the first damper mounting portion 31 and the second damper mounting portion 32 are provided on both sides of the C-ring crossbeam 2 in the width direction, and the grey curves characterize the dynamic stiffness of the damper mounting assembly 6 in FIG. 1. Referring to FIG. 7, the minimum dynamic stiffness of the damper mounting portion 3 in the length direction of the vehicle body in any frequency band is increased by at least 6.5 KN/mm, and the minimum dynamic stiffness of the damper mounting portion 3 in the width direction of the vehicle body in any frequency band is increased by at least 13 KN/mm.

In another embodiment, the first damper mounting portion 31 and the second damper mounting portion 32 are provided on the same side of the C-ring crossbeam 2 in the width direction.

It should be noted that the first damper mounting portion 31 and the second damper mounting portion 32 are arranged according to the actual situation of the vehicle, and the present document does not limit the position of the first damper mounting portion 31 and the second damper mounting portion 32.

In the embodiment of the present document, the damper mounting portion 3 includes a first damper locating hole 33 and a second damper locating hole 34, and the first damper locating hole 33 and the second damper locating hole 34 are clearance fitted with a vehicle damper locating portion disposed on the vehicle vibration damper 7.

Specifically, the vehicle damper locating portion includes a first vehicle damper locating pin and a second vehicle damper locating pin disposed on the vehicle vibration damper 7, and the first vehicle damper locating pin and the second vehicle damper locating pin correspond to the first damper locating hole 33 and the second damper locating hole 34, and in this way, positioning of the damper mounting portion 3 and the vehicle vibration damper 7 is achieved.

Specifically, the first vehicle damper locating pin and the second vehicle damper locating pin are clearance fitted with the first damper locating hole 33 and the second damper locating hole 34, respectively, i.e., the dimensions of the first damper locating hole 33 and the second damper locating hole 34 are larger than the diameters of the first vehicle damper locating pin and the second vehicle damper locating pin in at least one direction, respectively, and in some embodiments of the present document, the first damper locating hole 33 and the second damper locating hole 34 may be provided as oblong holes along the width direction or the length direction of the vehicle, so as to facilitate the positioning assembly of the damper mounting portion 3 and the vehicle damper locating portion, i.e., when installing, the vibration dampers are pre-positioned by inserting the damper locating pins into the corresponding damper locating holes, and then the vibration dampers are fixed to the rear vehicle floor by the connection between the damper mounting portion and the vehicle damper locating portion.

In one embodiment, the first damper mounting portion 31 and the second damper mounting portion 32 are provided on both sides of the C-ring crossbeam 2 in the width direction, respectively, and accordingly, the first damper locating hole 33 and the second damper locating hole 34 are provided on both sides of the C-ring crossbeam 2 in the width direction.

In another embodiment, the first damper mounting portion 31 and the second damper mounting portion 32 are provided on the same side of the C-ring crossbeam 2 in the width direction, and accordingly, the first damper locating hole 33 and the second damper locating hole 34 are provided on the same side of the C-ring crossbeam 2 in the width direction.

Specifically, the first damper locating hole 33 and the second damper locating hole 34 are provided on the circumferential sides of the first damper mounting portion 31 and the second damper mounting portion 32, respectively, so that precise positioning and assembly of the damper mounting portion 3 and the vehicle vibration damper device 7 can be achieved.

In the embodiment of the present document, the C-ring crossbeam 2 protrudes from the rear floor body 1, and the C-ring crossbeam 2 includes an inverted U-shaped structure. In such way, a lightweight rear vehicle floor can be achieved.

In the embodiment of the present document, the C-ring crossbeam 2 is provided with a first crossbeam mounting portion 21, and the first crossbeam mounting portion 21 is fixedly connected with a vehicle seat mounting portion.

Specifically, the first crossbeam mounting portions 21 are symmetrically provided on the C-ring crossbeam 2.

Specifically, the vehicle seat is provided with the vehicle seat mounting portion, and the vehicle seat mounting portion is arranged corresponding to the first crossbeam mounting portion 21, so as to realize a fixed connection between the first crossbeam mounting portion 21 and the vehicle seat.

Specifically, the first crossbeam mounting portion 21 and the vehicle seat are screwed together.

In the embodiment of the present document, the C-ring crossbeam 2 is provided with a second crossbeam mounting portion 22, and the second crossbeam mounting portion 22 is fixedly connected to a vehicle trim mounting portion.

Specifically, the second crossbeam mounting portions are symmetrically provided on the C-ring crossbeam 2.

Specifically, the vehicle trim is provided with the vehicle trim mounting portion, and the vehicle trim mounting portion is arranged corresponding to the second crossbeam mounting portion, so as to realize a fixed connection between the second crossbeam mounting portion and the vehicle trim.

Specifically, the second crossbeam mounting portion and the vehicle trim are screwed together.

In one embodiment, the C-ring crossbeam 2 may also provide mounting portions for other parts according to the realization requirements, so as to realize the connection between the other parts and the rear vehicle floor.

In an embodiment of the present document, the rear vehicle floor further includes a wheel cover 4 provided on the rear floor body 1, the wheel cover 4 and the rear floor body 1 are integrated into a one-piece structure.

Specifically, the rear floor body 1, the C-ring crossbeam 2, the damper mounting portion 3 and the wheel cover 4 are integrated into a one-piece cast aluminum rear floor.

In the embodiment of the present document, please refer to FIG. 6, the first damper mounting portion 31 and the second damper mounting portion 32 are provided with a reinforcing structure on a side away from the vehicle vibration damper 7.

Specifically, the first mounting through-hole and the second mounting through-hole are each provided with a reinforcing structure on the side away from the vehicle vibration damper 7. This reinforcing structure is a local extension structure of the first mounting through-hole and the second mounting through-hole, i.e., the parts around the first mounting through-hole and the second mounting through-hole on the first damper mounting portion 31 and the second damper mounting portion 32 are thickened or heightened, and in the present document embodiment, the positions around the first mounting through-hole and the second mounting through-hole on the first damper mounting portion 31 and the second damper mounting portion 32 protrude upwardly in an axial direction compared to other positions, so that the screwing lengths of the bolts and the mounting through-holes can be extended to realize a fixed connection between the damper mounting portion 3 and the vehicle vibration damper 7.

Furthermore, embodiments of the present document also provide a vehicle including a rear vehicle floor as described above.

The rear floor body, the C-ring crossbeam and the damper mounting portion provided in the one-piece structure of the present document can achieve a high degree of integration and lightweight of the vehicle body, and can improve the stiffness and NVH performance of the entire vehicle.

The rear floor body, the C-ring crossbeam and the damper mounting portion provided in the one-piece structure of the present document can achieve a high degree of integration of the vehicle body, reduce the number of parts, and reduce the Y-direction width of the damper mounting portion, which is beneficial to maximizing the luggage compartment volume and better wrapping of the human body by the seat; the vehicle rear floor of the one-piece structure of the present document can improve the production and assembly efficiency of the vehicle; the vehicle rear floor of the one-piece structure does not have the fatigue durability problem of the welds of the sheet metal parts, and can increase the service life of the vehicle rear floor; the vehicle rear floor of the one-piece structure replaces the welding assembly of multiple sheet metal parts, and the development cycle is short, and the accumulation of manufacturing tolerances of parts in multiple processes can be avoided; the vehicle rear floor of the one-piece structure of the present document has a high efficiency of force transmission, which can improve the torsional stiffness of the whole vehicle and extend the service life of the whole vehicle.

Specific embodiments of the present document are described below based on the above technical solutions.

### Embodiment 1

Referring to FIGS. 3-6, Embodiment 1 provides a rear vehicle floor including a rear floor body 1, further including a C-ring crossbeam 2 disposed on the rear floor body 1; the rear floor body 1 and the C-ring crossbeam 2 are integrated into a one-piece structure.

Furthermore, the rear vehicle floor further includes a wheel cover 4 disposed on the rear floor body 1, the wheel cover 4 and the rear floor body 1 are integrated into a one-piece structure.

Specifically, the rear floor body 1, the C-ring crossbeam 2, the damper mounting portion 3, and the wheel cover 4 are integrated into a one-piece cast aluminum structure, so that 17 sheet metal parts can be reduced, and its equivalent weight can be reduced from 16.2 kg to 5.6 kg, with a weight reduction ratio of up to 65%; furthermore, accumulation of manufacturing tolerances of the parts of the multi-processing parts can be avoided, and the positional accuracy of the mounting portions on the rear vehicle floor can be substantially improved.

In addition, the damper mounting portion 3 and the rear floor body 1 are integrally cast into one piece, so that the excitation received by the damper mounting portion 3 can be transmitted along the C-ring crossbeam 2 and the rear floor body 1 to the entire body in all directions, and the transmission paths thereof are more numerous and the transmission efficiency is high, so that the static stiffness, dynamic stiffness, and NVH performance of the damper mounting portion 3 can be improved.

Furthermore, the damper mounting portion 3 includes a first mounting through-hole and a second mounting through-hole, the first mounting through-hole and the second mounting through-hole are fixedly connected to vehicle damper mounting portions provided on the vehicle vibration damper 7; the first mounting through-hole and the second mounting through-hole are provided on both sides of the C-ring beam 2 in the width direction, respectively.

Specifically, the damper mounting portions 3 are symmetrically provided at the two ends of the C-ring crossbeam 2 along the length direction, and the damper mounting portions 3 are used for shock absorption of the vehicle.

Specifically, the vehicle damper mounting portion includes a first vehicle damper mounting portion and a second vehicle damper mounting portion disposed on the vehicle vibration damper 7, the first vehicle damper mounting portion and the second vehicle damper mounting portion are arranged corresponding to the first mounting through-hole and the second mounting through-hole, and the fixed connection between the damper mounting portion 3 and the vehicle vibration damper 7 is achieved by bolt connection.

Furthermore, the first mounting through-hole and the second mounting through-hole are provided with a reinforcing structure on a side away from the vehicle vibration damper 7, i.e., the parts around the first mounting through-hole and the second mounting through-hole on the damper mounting portion 3 are thickened or heightened. In this way, the screwing length of the bolt and the mounting through-hole can be extended to achieve a fixed connection between the damper mounting portion 3 and the vehicle vibration damper 7.

Specifically, the dynamic stiffness of the damper mounting portion 3 along the length direction of the vehicle body is greater than 22 KN/mm, and the dynamic stiffness of the damper mounting portion 3 along the width direction of the vehicle body is greater than 28 KN/mm.

Specifically, the minimum dynamic stiffness of the damper mounting portion 3 in the length direction of the vehicle body in any frequency band is increased by at least 6.5 KN/mm, and the minimum dynamic stiffness of the damper mounting portion 3 in the width direction of the vehicle body in any frequency band is increased by at least 13 KN/mm.

At the same time, the damper mounting portion 3 includes a first damper locating hole 33 and a second damper locating hole 34, the first damper locating hole 33 and the second damper locating hole 34 are clearance fitted with a vehicle damper locating portion disposed on the vehicle vibration damper 7; the first damper locating hole 33 and the second damper locating hole 34 are disposed on both sides of the C-ring cross-member 2 in the width direction, respectively. In this way, the dynamic stiffness of the damper mounting portion 3 can be maximized.

Specifically, the first damper locating hole 33 and the second damper locating hole 34 are provided on the peripheral side of the first mounting through-hole and the second mounting through-hole, respectively, and in this embodiment, the first damper locating hole 33 and the second damper locating hole 34 are closer to the inner side of the vehicle as compared to the first mounting through-hole and the second mounting through-hole. In this way, precise positioning and assembly of the damper mounting portion 3 and the vehicle vibration damper 7 can be achieved.

Furthermore, the C-ring crossbeam 2 protrudes from the rear floor body 1, and the C-ring crossbeam 2 includes an inverted U-shaped structure. In this way, lightweight of the rear vehicle floor can be achieved.

Furthermore, the C-ring crossbeam 2 is provided with a first crossbeam mounting portion 21, and the first crossbeam mounting portion 21 is fixedly connected to a vehicle seat mounting portion.

Meanwhile, the C-ring crossbeam 2 is provided with a second crossbeam mounting portion 22, the second crossbeam mounting portion 22 is fixedly connected to a vehicle trim mounting portion.

The rear floor body, the C-ring crossbeam and the damper mounting portion provided in the one-piece structure of Example 1 can achieve a high degree of integration and lightweight of the vehicle body, and can improve the stiffness and NVH performance of the entire vehicle.

### Example 2

The difference between Embodiment 2 and Embodiment 1 lies in the position of the first mounting through-hole and the second mounting through-hole, and the similarities with Embodiment 1 will not be repeated herein, and the differences between Embodiment 2 and Embodiment 1 are now described as follows:

Specifically, the damper mounting portion 3 includes a first mounting through-hole and a second mounting through-hole, and the first mounting through-hole and the second mounting through-hole are fixedly connected to a vehicle damper mounting portion provided on the vehicle vibration damper 7; and the first mounting through-hole and the second mounting through-hole are provided at the same side of the C-ring crossbeam 2 in the width direction.

The rear floor body, the C-ring crossbeam and the damper mounting portion provided in the one-piece structural of Example 2 can achieve a high degree of integration and lightweight of the vehicle body, and can improve the stiffness and NVH performance of the vehicle as a whole.

The above is only a preferred embodiment of the present document and is not intended to limit the present document, and any modifications, equivalent replacements, improvements, etc. made within the spirit and principles of the present document shall be included in the protection scope of the present document.

## Claims

1. A rear vehicle floor, comprising a rear floor body (1), **characterized in that** further comprising a C-ring crossbeam (2) provided on the rear floor body (1);
the rear floor body (1) and the C-ring crossbeam (2) being integrated into a one-piece structure.

2. The rear vehicle floor according to claim 1, wherein further comprises a damper mounting portion (3) provided on the rear floor body (1);
the damper mounting portion (3) and the rear floor body (1) are integrated into a one-piece structure.

3. The rear vehicle floor according to claim 2, wherein the damper mounting portion (3) comprises a first damper mounting portion (31) and a second damper mounting portion (32), the first damper mounting portion (31) and the second damper mounting portion (32) are fixedly connected to a vehicle damper mounting portion; the first damper mounting portion (31) and the second damper mounting portion (32) are respectively provided on both sides or provided on the same side of the C-ring crossbeam (2) in a width direction.

4. The rear vehicle floor according to claim 2, wherein the damper mounting portion (3) comprises a first damper locating hole (33) and a second damper locating hole (34), the first damper locating hole (33) and the second damper locating hole (34) are clearance fitted to a vehicle damper locating portion;
the first damper locating hole (33) and the second damper locating hole (34) are respectively provided on both sides or provided on the same side of the C-ring crossbeam (2) in a width direction.

5. The rear vehicle floor according to claim 1, wherein the C-ring crossbeam (2) projects from the rear floor body (1), the C-ring crossbeam (2) comprises an inverted U-shaped structure.

6. The rear vehicle floor according to claim 1, wherein the C-ring crossbeam (2) is provided with a first crossbeam mounting portion (21), the first crossbeam mounting portion (21) is fixedly connected to a vehicle seat mounting portion.

7. The rear vehicle floor according to claim 1, wherein the C-ring crossbeam (2) is provided with a second crossbeam mounting portion (22), the second crossbeam mounting portion (22) is fixedly connected to a vehicle trim mounting portion.

8. The rear vehicle floor according to claim 1, wherein further comprises a wheel cover (4) provided on the rear floor body (1), the wheel cover (4) and the rear floor body (1) are integrated into a one-piece structure.

9. The rear vehicle floor according to claim 2, wherein the dynamic stiffness of the damper mounting portion (3) along a length direction of the vehicle body is greater than 22 KN/mm, and the dynamic stiffness of the damper mounting portion (3) along a width direction of the vehicle body is greater than 28 KN/mm.

10. A vehicle **characterized in that** it comprises a rear vehicle floor as claimed in any one of claims 1-10.
